Europäisches Patentamt

European Patent Office

Office européen des brevets

(19)

(11) Numéro de publication: **0 008 982**

**A1**

(12) # DEMANDE DE BREVET EUROPEEN

(21) Numéro de dépôt: 79400597.5

(22) Date de dépôt: 29.08.79

(51) Int. Cl.³: **B 62 K 27/00**
**B 62 K 13/02**

(30) Priorité: 30.08.78 FR 7825357

(43) Date de publication de la demande:
19.03.80 Bulletin 80 6

(84) Etats Contractants Désignés:
BE CH DE GB IT NL SE

(71) Demandeur: Busseuil, Jacques
**Route du Sanatorium Velars S. Ouche**
**F-21370 Plombieres-Les-Dijon(FR)**

(72) Inventeur: Busseuil, Jacques
**Route du Sanatorium Velars S. Ouche**
**F-21370 Plombieres-Les-Dijon(FR)**

(74) Mandataire: **Corre, Jacques Denis Paul et al,**
**Cabinet Regimbeau 26, Avenue Kléber**
**F-75116 Paris(FR)**

(54) Dispositif pour accoupler deux cycles en tandem.

(57) L'invention concerne un dispositif d'accouplement pour accoupler deux cycles en tandem au moyen d'une barre d'áccouplement (3) caractérisé en ce que ladite barre d'accouplement (3) est fixée à chacun des deux cycles par une articulation à la cardan (4,5) constituée d'une première fourchette (15) solidaire d'une des deux extrémités de la barre, d'un croisillon (10) de cardan s'articulant dans ladite première fourchettè (15) par un de ses bras (11), et d'une seconde fourchette (13) s'articulatn sur l'autre bras (12) du croi sillon (10), des moyens étant prévus pour fixer ladite seconde fourchette (13) à l'un des cycles (1), un bras d'un croisillon étant parallèle à un bras de l'autre croisillon et les deux autres bras des deux croisillons étant concourants lorsque les deux cycles sont dans un même plan vertical.

FIG _3

## DISPOSITIF POUR ACCOUPLER DEUX CYCLES EN TANDEM

L'invention concerne les cycles et plus particulèrement un dispositif pour accoupler deux cycles de façon à constituer un tandem et obtenir ainsi tous les avantages de ce type de véhicule de promenade, sans en avoir certains inconvénients.

On sait par exemple que sur un tandem classique, les deux pédaliers tournent en synchronisme, ce qui oblige les deux cyclistes à pédaler en même temps et au même rythme ; il n'est donc pas possible que l'un deux se repose momentanément, entraîné par l'autre. On sait aussi qu'un tandem exige pour son rangement une longueur qui est presque celle d'une petite voiture, et que le transport d'un tel engin en voiture est incommode. Au contraire, deux bicyclettes se rangent facilement côte à côte sur le toit d'une voiture.

Accoupler deux bicyclettes pour former un tandem pose des problèmes de stabilité ; si l'on relie la selle de la première au châssis ou au guidon de la seconde par un câble, l'ensemble est stable, quand le câble est tendu. Mais l'arrière ne peut en aucun cas pousser l'avant ; il ne peut apporter de contribution à la résistance à l'avancement qui s'exerce principalement sur l'avant. De plus, si l'arrière rattrape l'avant, une chute générale est à craindre.

Une jonction par barre rigide articulée à rotule sur chaque engin n'est pas non plus satisfaisante : si l'engin arrière pousse, tout écart de la ligne de route générale a tendance à s'accentuer, parce qu'une force de de réaction oblique exercée sur l'engin arrière par exemple a tendance à l'incliner vers l'extérieur, (à droite par exemple) ; le cycliste corrigera instinctivement en tournant son guidon à droite ; puis ensuite à gauche pour revenir en ligne ; l'ensemble est instable et la maîtrise de cette instabilité est pratiquement impossible parce que la réaction s'exerce aussi sur le cycle avant, et les deux cyclistes n'arrivent pas à coordonner leurs réflexes.

Si l'on remplace les rotules par des joints à la cardan dont les croisillons sont parallèles, quand les engins sont en position normale, la liaison est équivalente à la précédente, et le même phénomène d'instabilité apparaît en route. Mais il n'en est pas de même si un des cardans a un bras horizontal et un bras oblique. C'est en cela que réside l'invention.

L'invention concerne un dispositif d'accouplement de deux cycles au moyen d'une barre d'accouplement, caractérisé en ce que ladite barre d'accouplement est fixée à chacun des deux cycles par une articulation à la cardan constituée d'une première fourchette solidaire d'une des deux extrémités de la barre, d'un croisillon de cardan s'articulant dans ladite première fourchette par un de ses bras, et d'une seconde fourchette s'articulant sur l'autre bras du croisillon, des moyens étant prévus pour fixer ladite seconde fourchette à l'un des cycles, un bras d'un croisillon étant parallèle à un bras de l'autre croisillon et les deux autres bras des deux croisillons étant concourants lorsque les deux cycles sont dans un même plan vertical.

Selon une autre caractéristique de l'invention, les fourchettes sont montées sur la barre d'accouplement d'une part et sur les châssis des cycles d'autre part dans des positions telles que, quand les cycles sont dans un même plan vertical les bras parallèles des deux croisillons soient horizontaux.

Dans une telle position, les bras concourants des deux cycles sont tels que l'un soit vertical et l'autre fasse avec la verticale un angle $\alpha$ compris entre 10 et 45°.

Le bras de croisillon faisant un angle $\alpha$ avec la verticale sera incliné vers l'arrière par rapport au zénith si ce bras appartient au croisillon situé du côté du cycle avant et incliné vers l'avant si ce bras appartient au croisillon situé du côté du cycle arrière.

Suivant une forme d'exécution particulière de l'invention, les deux fourchettes solidaires de la barre d'accouplement sont dans un même plan, et les deux fourchettes rendues solidaires des cycles sont dans les plans de ces cycles, d'où il résulte que, quand les cycles sont dans un même plan vertical, chacun des bras de chaque croisillon qui s'articule sur la barre d'accouplement est lui-même horizontal.

Suivant la même forme d'exécution particulière de l'invention la fourchette du cycle avant est fixée sur ledit cycle de façon que ce  soit le bras du croisillon du cycle avant perpendiculaire à celui qui est horizontal qui fasse un certain angle avec le zénith, ledit angle étant tel que l'angle qu'elle forme avec la barre d'accouplement soit voisin de 25 degrés.

Il en résulte que si, en marche, le cycle arrière s'écarte du plan vertical du cycle avant, et si donc la barre d'accouplement s'écarte de ce plan, elle subit une rotation sur elle-même ; cette rotation est transmise, par le cardan arrière, au cycle arrière et le fait basculer à gauche s'il s'écarte à droite et à droite s'il s'écarte à gauche.

Les cycles ont, par construction, une certaine chasse qui tend à faire tourner le guidon du côté où il s'incline ; le réflexe normal du cycliste est d'agir dans le même sens. Ces deux effets combinés produisent une régulation qui ramène le cycle arrière dans l'axe du cycle avant ; cette régulation joue aussi bien en poussée qu'en traction.

Si l'angle en question était nul, la régulation n'interviendrait pas. Si l'angle en question est excessif, la régulation est surabondante, et engendre des oscillations impossibles à maîtriser ; avec des cycles d'adultes normaux et de même taille, l'expérience a montré que la meilleure valeur de l'inclinaison est d'environ 25 degrés.

Suivant une autre caractéristique de l'invention, l'angle d'inclinaison est réglable, de façon à permettre l'accouplement de cycles de tailles différentes, notamment un cycle d'enfant derrière un cycle d'adulte. A cet effet, le manche de la fourchette arrière du cycle avant est en deux parties, articulées l'une sur l'autre, l'une des parties étant solidaire du cadre, et leur position relative peut être bloquée par tout moyen convenable, par exemple par le serrage d'un écrou.

Les cycles peuvent être munis à titre permanent d'une fourchette avant ou arrière soudée au châssis. L'invention prévoit aussi des moyens permettant de monter ces fourchettes sur des châssis ordinaires par des organes de fixation adaptés aux modèles de cycles les plus courants.

La Figure 1 représente deux cycles accouplés en tandem conformément à l'invention.

Les Figures 2 en perspective, et 3 en élévation, représentent le cardan du cycle avant.

La Figure 4 est un schéma explicatif de la position relative de deux cycles accouplés conformément à l'invention, quand le premier cycle aborde un virage.

Un cycle avant 1 et un cycle arrière 2 sont accouplés par une barre d'accouplement rigide 3 reliée au cycle avant par un cardan 4 et au cycle arrière par un cardan 5. L'invention porte sur la barre 3 et les cardans 4 et 5.

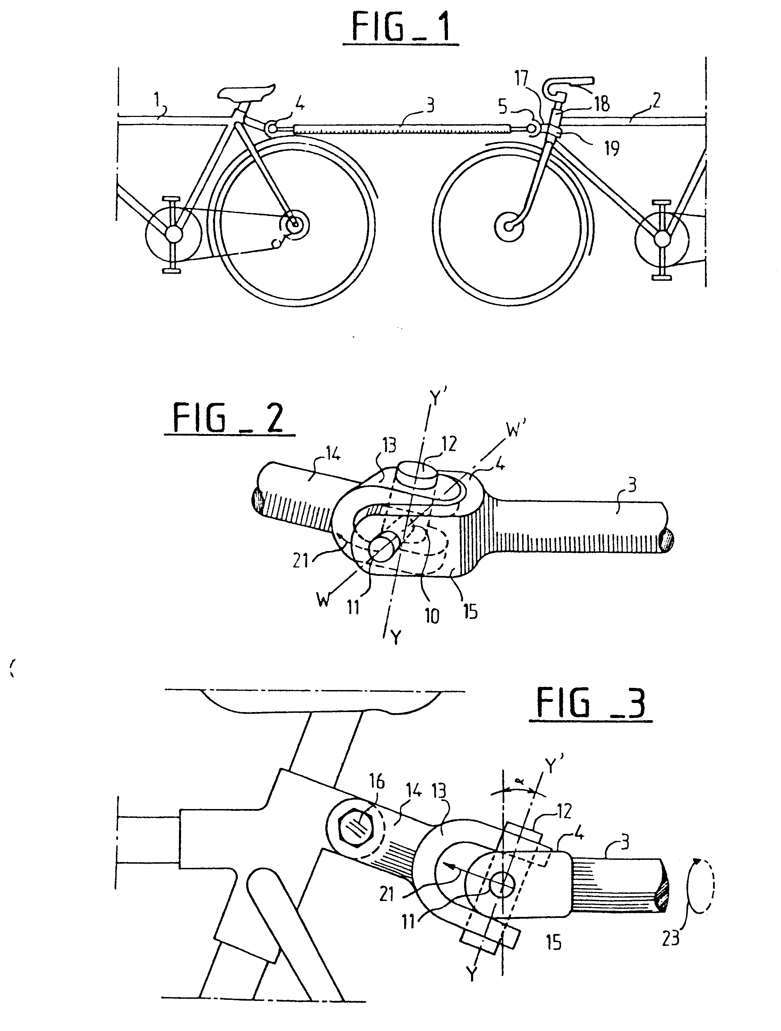

On voit mieux sur les Figures 2 et 3, le cardan avant 4 qui est constitué d'un croisillon 10 à deux bras orthogonaux 11 et 12 solidaires l'un de l'autre. Le bras 11 est articulé dans une fourchette 15 solidaire de la barre d'accouplement 3 ; le bras 12 est articulé dans une fourchette 13 solidaire d'un manche 14 qui est lui-même rendu solidaire du cadre du cycle avant par une fixation lui permettant de lui donner une certaine inclinaison par rapport à l'horizontale ; on a supposé, dans l'exemple de réalisation représenté, que cette fixation est assurée par le dispositif à boulon et écrou 16 qui permet généralement sur un cycle d'assurer le réglage en hauteur de la selle. Tout autre moyen de fixation, tel qu'un collier, ou une bride de serrage peut convenir. Une telle fixation peut aussi être soudée d'origine directement sur le châssis. Toutefois, un moyen de réglage de l'inclinaison du manche 14 est de préférence prévu pour des raisons qui apparaîtront plus loin. Soit $\alpha$ (Figure 3) l'inclinaison du manchon 14 par rapport à l'horizontale quand le cycle 1 est vertical ; $\alpha$ est aussi égal à l'angle que fait le bras 12 par rapport au zénith.

Le cardan arrière 5 (Figure 1) est symétrique du cardan 4. Son manche 17 est fixé au tube de direction 18 du cycle arrière 2, soit au moyen d'un collier 19, soit par soudure, soit par tout autre moyen. On a supposé, sur la Figure 1, que le manchon 17 est, dans le prolongement de la barre 3 quand les deux cycles suivent la même route.

Si l'angle $\alpha$, défini plus haut, était nul, et si l'un des cycles est vertical, l'autre l'est aussi, même si les deux cycles ne sont pas dans un même plan, que leurs deux plans soient parallèles ou non. En marche normale, leur position relative est indifférente, et ils pourraient même presque rouler côte à côte.

Si l'angle $\alpha$ n'est pas nul, et si le cycle arrière dérive à droite ou à gauche, les plans des deux cycles ne restent pas parallèles. En effet, partant de la position de la Figure 1 où les deux cycles sont supposés dans le plan de la figure, si le cycle 2 dérive à gauche, la barre 3 vient en avant du plan de la figure, en tournant autour du cardan 4, plus précisément en tournant autour du centre du croisillon 10 de ce cardan. Au cours de cette rotation, les extrémités du bras 11 de ce même croisillon se déplacent sur des arcs d'un même cercle perpendiculaire à l'axe $12_a$ du bras 12 ; ces arcs, figurés par des flèches 21 et 22 ne sont donc pas dans un plan horizontal, et de ce fait, au cours de sa rotation autour du cardan 4, la barre 3 (tout en restant horizontale) subit une légère rotation représentée par la flèche 23 (en supposant toujours que le cycle arrière dérive à gauche).

Cette rotation est transmise au cycle arrière par le cardan 5. Comme annoncé, les plans des deux cycles ne sont plus parallèles. Le cycle arrière, qui est supposé avoir dérivé à gauche, est sollicité par un couple ayant tendance à l'incliner à droite, et par réaction le cycle avant est sollicité par un couple ayant tendance à l'incliner à gauche.

En raison de la chasse que les cycles ont normalement par construction, afin de leur donner de la stabilité quand ils sont chargés, et en raison des réflexes classiques des cyclistes, le cycle avant est sollicité à gauche pour rejoindre la route du cycle arrière, et le cycle arrière est sollicité à droite, pour rejoindre la route du cycle avant. Ainsi est mis en jeu un mécanisme d'auto-régulation qui stabilise les deux cycles sur la même route, même en cas de virage. Comme déjà dit, la régulation est inopérante si l'angle $\alpha$ est nul, et le taux de régulation augmente avec $\alpha$. Au-dessus d'une certaine valeur, il est surabondant, et entraîne des oscillations (ou "pompage"), qui font divaguer les deux cycles l'un par rapport à l'autre.

L'expérience a montré que pour des cycles d'adultes de même taille, la valeur optimale de $\alpha$ est d'environ 25 degrés.

Dans la forme de réalisation qui précède, on a supposé que le cardan 5 arrière a une branche verticale et une branche horizontale, et que dans le cardan avant 4 il y a une branche 11 horizontale, parallèle à la branche correspondante du cardan 5, et une branche oblique 12 et on rappelle que cette inclinaison joue un rôle fondamental dans la régulation. Du fait de cette inclinaison, le cardan avant joue le rôle de régulateur, le cardan arrière étant passif. Une régulation interviendrait aussi si le cardan arrière 5 était régulateur, le cardan avant étant passif. Il faut alors que l'inclinaison $\alpha$ du cardan arrière soit faite vers l'avant.

Les deux cas ne sont pas cependant équivalents si les cycles sont engagés dans un virage.

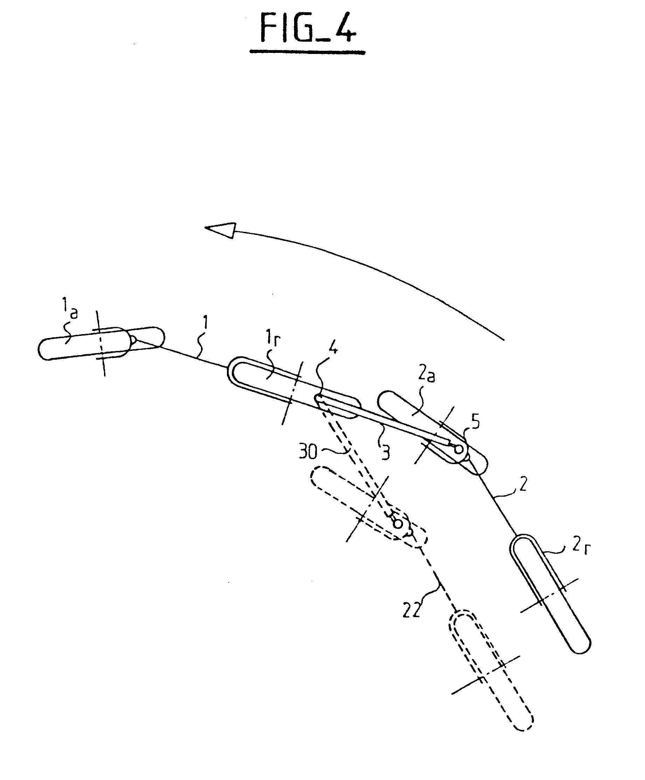

Pour s'en convaincre, on se reportera à la figure 4 qui est une vue en plan, où on suppose que le cycle avant 1 (figuré schématiquement par ses roues avant et arrière $1_a$ et $1_r$) et le cycle arrière 2 (figuré schématiquement par ses roues avant et arrière $2_a$ et $2_r$) effectuent un virage autour d'un point O. Les axes des quatres roues passent tous par O.

Le cardan avant 4 étant régulateur, la régulation a pour effet de maintenir la barre 3 dans le plan du cycle avant, comme représenté sur la figure, et les deux cycles suivent sensiblement le même trajet.

Si le cardan arrière 5 est régulateur, le cardan 4 étant passif, la régulation a pour effet d'amener et de maintenir la barre 3 dans le plan du cycle arrière. La position du cycle arrière est alors celle représentée en 22 en traits discontinus, la barre d'accouplement étant en 30. On voit qu'alors le deuxième cycle suit un trajet sensiblement plus serré que le premier. Si deux cycles seulement sont accouplés, c'est acceptable. Mais s'il y a plus de deux cycles les uns derrière les autres, il est préférable de se placer dans le premier cas, afin que les cycles du train suivent sensiblement le même trajet.

Qu'il s'agisse du cardan avant ou du cardan arrière, un moyen de lui faire jouer le rôle de régulateur consiste en ce que le bras incliné soit celui qui est articulé sur la fourchette solidaire de la barre, et non plus sur celle qui est rendue solidaire du cadre du cycle correspondant.

La Figure 2 qui, jusqu'ici, a représenté un cardan avant régulateur, peut représenter aussi bien un cardan arrière régulateur. La barre d'accouplement est alors en 14 et la référence 3 correspondrait au manche 17 de la figure 1. En effet, si le bras oblique est articulé sur la fourchette solidaire de la barre, l'inclinaison de ce bras doit être en sens inverse du cas où le bras oblique est articulé sur l'autre fourchette. Donc il est incliné vers l'avant s'il s'agit du cardan avant, et vers l'arrière s'il s'agit du cardan arrière. Le moyen d'obtenir l'inclinaison peut être l'emploi d'une barre coudée vers son extrémité avec de préférence une articulation permettant de régler ∝ et le bloquer à une valeur convenable. On peut aussi souder obliquement la fourchette sur la barre.

La position des fourchettes d'un cardan passif (horizontale ou verticale) est indifférente.

Il est également possible que les cardans avant et arrière soient régulateurs l'un et l'autre. Dans ce cas, la régulation a pour effet de ramener la barre d'accouplement à la fois dans le plan du cycle avant et dans celui du cycle arrière, rendant les virages difficiles. C'est pourquoi, sauf raisons particulières, il y a intérêt à ce que seul le cardan avant soit régulateur.

Il est possible d'accoupler un cycle d'enfant derrière celui d'un adulte. Dans ce cas, la barre 3 n'est pas horizontale et l'angle α doit être compté par rapport au plan perpendiculaire à cette barre.

Il est bien entendu possible aussi que l'un des cycles au moins soit moteur.

REVENDICATIONS

1. Dispositif d'accouplement pour accoupler deux cycles en tandem au moyen d'une barre d'accouplement, caractérisé en ce que ladite barre d'accouplement est fixée à chacun des deux cycles par une articulation à la cardan constituée d'une première fourchette solidaire d'une des deux extrémités de la barre, d'un croisillon de cardan s'articulant dans ladite première fourchette par un de ses bras, et d'une seconde fourchette s'articulant sur l'autre bras du croisillon, des moyens étant prévus pour fixer ladite seconde fourchette à l'un des cycles, un bras d'un croisillon étant parallèle à un bras de l'autre croisillon et les deux autres bras des deux croisillons étant concourants lorsque les deux cycles sont dans un même plan vertical.

2. Dispositif selon la revendication 1, caractérisé en ce que les bras parallèles des deux croisillons sont horizontaux lorsque les deux cycles sont dans un même plan vertical.

3. Dispositif selon la revendication 2, caractérisé en ce que, lorsque les deux cycles sont dans un même plan vertical, les bras concourants des deux croisillons sont tels que l'un soit vertical et l'autre fasse avec la verticale un angle $\alpha$ compris entre 10 et 45°.

4. Dispositif selon la revendication 3, caractérisé en ce que l'angle $\alpha$ est voisin de 25°.

5. Dispositif selon la revendication 4, caractérisé en ce que le bras de croisillon faisant un angle $\alpha$ avec la verticale est celui du croisillon situé du côté du cycle avant et en ce que ce bras est incliné vers l'arrière par rapport au zenith.

6. Dispositif selon la revendication 4, caractérisé en ce que le bras de croisillon faisant un angle $\alpha$ avec la verticale est celui du croisillon situé du côté du cycle arrière et en ce que ce bras est incliné vers l'avant par rapport au zenith.

Pl 1 / 2

# FIG _ 1

# FIG _ 2

# FIG _ 3

# FIG_4

0008982

Numéro de la demande

EP 79 40 0597

**Office européen des brevets**

**RAPPORT DE RECHERCHE EUROPEENNE**

| | DOCUMENTS CONSIDERES COMME PERTINENTS | | CLASSEMENT DE LA DEMANDE (Int. Cl.³) |
|---|---|---|---|
| Categorie | Citation du document avec indication. en cas de besoin. des parties pertinentes | Revendica-tion concernee | |
| | US - A - 2 756 069 (MANNGARN)<br>* Figures 1-6; colonnes 1-4 *<br><br>-- | 1 | B 62 K 27/00<br>B 62 K 13/02 |
| A | FR - A - 886 619 (DUPIN)<br>* Figures 1-5; page 4, résumé *<br><br>---- | 1 | |
| | | | **DOMAINES TECHNIQUES RECHERCHES (Int. Cl.³)**<br><br>B 62 K |

**CATEGORIE DES DOCUMENTS CITES**

X: particulièrement pertinent

A: arriere-plan technologique

O: divulgation non-ecrite

P: document intercalaire

T: theorie ou principe à la base de l'invention

E: demande faisant interference

D: document cite dans la demande

L: document cite pour d'autres raisons

&: membre de la même famille. document correspondant

Le present rapport de recherche a ete etabli pour toutes les revendications

| Lieu de la recherche | Date d'achevement de la recherche | Examinateur |
|---|---|---|
| La Haye | 05-12-1979 | VANNESTE |

OEB Form 1503.1  06.78